# EUROPEAN PATENT APPLICATION

(11) **EP 2 538 615 A1**
(43) Date of publication of application: **26.12.2012**
(21) Application number: 12184666.1
(22) Date of filing: 13.07.2004
(51) Int. Cl.: H04L 12/28

(54) **Signaling method for WLAN network control**

(30) Priority: 17.07.2003 US 488060 P
(62) Divisional of application: 11178489.8
(71) Applicant: INTERDIGITAL TECHNOLOGY CORPORATION, Wilmington, DE 19810 (US)
(72) Inventor: Rudolf, Marian, Montreal, Québec H3C 4L3 (CA); Hunkeler, Teresa Joanne, Montreal, Québec H4A 2V1 (CA); Rahman, Shamim Akbar, Cote St. Luc, Québec H4V 1B8 (CA); Dick, Stephen G., Nesconset, NY New York 11767 (US)
(74) Representative: Johansson, Magnus

(57) **Abstract**

A wireless local area network (WLAN) includes a station, an access point (AP), and a network management entity (NME). A method for remote radio resource management in the WLAN begins by configuring a trigger condition at the AP. A determination is made whether the trigger condition has been met, and a notification message is sent from the AP to the NME if the trigger condition has been met.

## Description

FIELD OF INVENTION

The present invention relates to wireless local area network (WLAN) systems, and more particularly, to remote radio resource management (RRM) in a WLAN.

BACKGROUND

Simple network management protocol (SNMP) is a widely utilized client-server based protocol allowing a remote network management entity (NME, i.e., an "agent") to monitor network client devices. In a WLAN context, the agent is typically an access point (AP). The SNMP protocol allows retrieval of information from the client, via a GET command. Another feature of the SNMP protocol is that the client device (i.e., the AP) can send notifications to the NME.

These notifications, or event-triggered reports, are widely used, for example, in the universal mobile telecommunications system (UMTS) for triggering measurement reports to inform the radio network controller (RNC) of critical situations such as handover, high interference levels in a cell, or a change in soft handover candidate cells. These notifications are an efficient means of keeping signaling overhead low in a mobile communications network.

WLANs based on 802.11 have only three standardized notifications (Disassociate, Deauthenticate, and Authenticate Failure). These notifications are part of the standardized 802.11 management information base (MIB). With the move towards WLAN integration into multiple cell deployments, RRM can be used to maintain efficiency and inter-operability of WLAN access. Presently, there is no existing IEEE 802.11 standard relating to remote RRM (i.e., not implemented in the AP) to benefit from the signaling efficiency and traffic load reduction as allowed by event-triggered reporting in UMTS, for example.

SUMMARY

A wireless local area network (WLAN) includes a station, an access point (AP), and a network management entity (NME). A method for remote radio resource management (RRM) in the WLAN begins by configuring a trigger condition at the AP. A determination is made whether the trigger condition has been met, and a notification message is sent from the AP to the NME if the trigger condition has been met.

Another method for remote RRM in the WLAN begins by transmitting a request message from the station to the AP. The request message is processed at the AP, and is responded to by sending a response message from the AP to the station. The contents of the response message are evaluated at the AP and a notification message is sent from the AP to the NME based on the contents of the response message.

A third method for remote RRM in the WLAN begins by measuring a parameter at the station and reporting the parameter from the station to the AP. The parameter is compared to a predetermined threshold at the AP and a notification message is sent from the AP to the NME if the parameter meets the threshold.

A network management entity (NME) for remote radio resource management in a wireless local area network (WLAN) having a station and an access point (AP) includes receiving means for receiving a notification message from the AP, processing means for processing the notification message, and managing means for managing the radio resources of the WLAN based on the contents of the notification message.

An access point (AP) in a wireless local area network (WLAN) having a station and a network management entity (NME) includes receiving means for receiving information from the station; processing means for processing the information and generating a notification message, the contents of the notification message based on the processed information; and transmitting means for transmitting the notification message to the NME.

BRIEF DESCRIPTION OF THE DRAWINGS

A more detailed understanding of the invention may be had from the following description of a preferred embodiment, given by way of example and to be understood in conjunction with the accompanying drawings, wherein:

Figure 1 is a block diagram of the IEEE 802.11 protocol stack;

Figure 2 is a flow diagram showing sending a notification message based on an association response frame;

Figure 3 is a flow diagram showing sending a notification message based on a reassociation response frame;

Figure 4 is a flow diagram showing sending a notification message based on a channel occupation value;

Figure 5 is a flow diagram showing sending a notification message based on a signal quality value;

Figure 6 is a flow diagram showing sending a notification message based on an in band interference value;

Figure 7 is a flow diagram showing sending a generic notification message when a trigger is activated at the AP; and

Figure 8 is a flow diagram showing an alternate embodiment of sending a generic notification message when a trigger is activated at the AP.

DETAILED DESCRIPTION OF THE PREFERRED EMBODIMENTS

The present invention can be implemented as an add-on to the WLAN IEEE 802.11 standards, including 802.11 baseline, 802.11a, 802.11b, and 802.11g, which are the basic WLAN air interface specifications. The present invention can also be implemented in other 802.11-based systems, in 802.16-based systems, and in other wireless network systems.

There are three types of media access control (MAC) frames, or signaling messages, in the 802.11 specifications, including data frames (for carrying a payload), control frames (for example, for carrying acknowledgements), and management frames (for example, beacons). Generally speaking, there are several subtypes for each frame type. These frame types all have particular contents or information elements (IEs) as set forth in current 802.11 specifications.

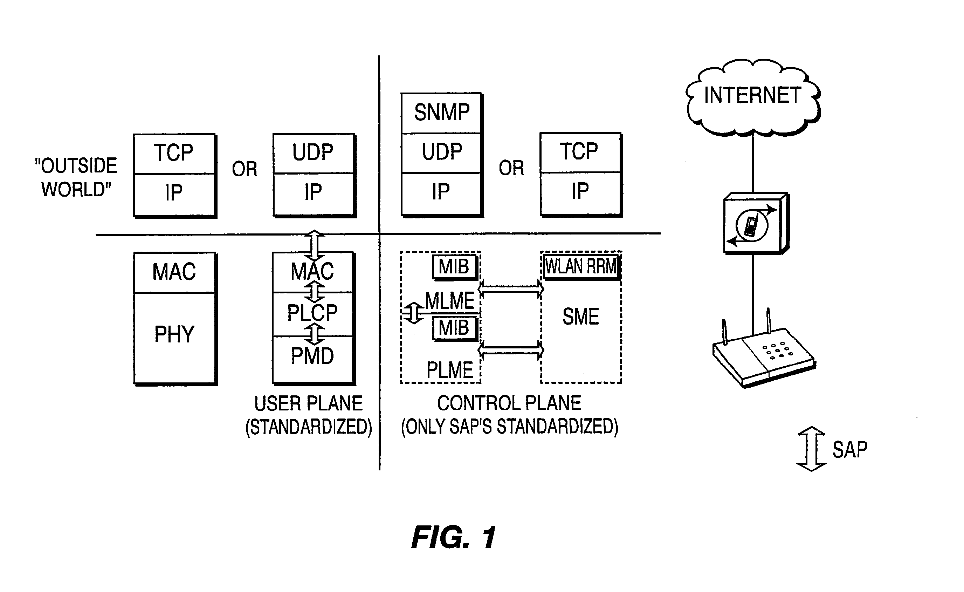

As shown in Figure 1, a service primitive is an internal station signaling message used for inter-layer and/or inter-protocol entity exchanges (for example, from a station management entity (SME) to a MAC sublayer management entity (MLME) and vice versa) with standardized message contents. The particular format of the message is not specified by the standard (it can be implementation-specific); only the content is specified. This type of message is usually used to initiate and/or confirm an action such as sending a particular frame for management purposes to another station.

To achieve remote RRM in a WLAN environment, the following set of signaling messages (station management (SMT) notifications) are proposed. Each of the messages is defined as a SMT notification. An SMT notification in accordance with a preferred embodiment of the present invention is a simple signaling message on the network side (functioning like a measurement report message from a Node B to a RNC in UMTS exchanged over the UMTS Iub/Iur interfaces). Basically, the AP sends SMT notifications as a kind of SNMP protocol message once certain conditions are fulfilled. The conditions can come from L 1 and L2, and will likely contain measurements. Because SNMP is situated above L1 and L2 (the MAC layer), a UDP/IP message format would typically be used. An SMT notification can be exchanged by other means, such as from a station to an AP over the air interface carried by IP or a MAC management frame, or by encapsulating the SMT notification into a MAC frame.

The notifications sent from the AP to the NME in accordance with the present invention can be in formats other than SMT notifications or SNMP messages. The notification could be formatted in Extensible Markup Language (XML) or be sent as service primitives exchanged between protocol entities, even if the protocol entities reside in the same physical piece of hardware. For example, a notification could be sent as a primitive across the service access point (SAP) from the MAC layer to the IP layer, with both layers residing on the station.

For purposes of discussion of the operation of the present invention, it is assumed that the notifications will be sent using SNMP, and are also referred to herein as "SMT notifications." It is noted that the present invention operates in the same manner regardless of the format of the notifications or the means used to send the notifications.

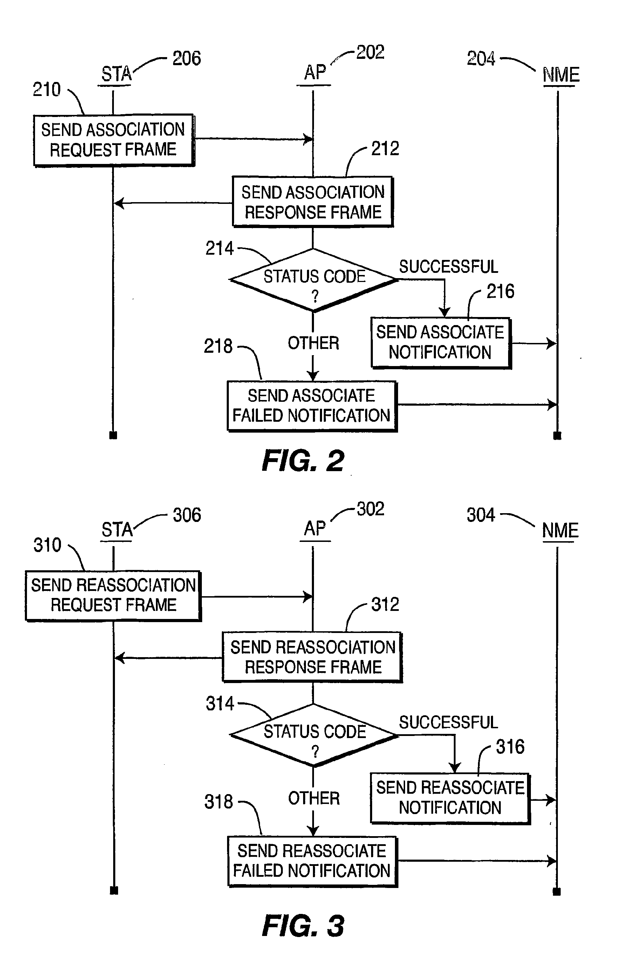

Figure 2 is a flow diagram showing notification messages sent by an AP 202 to a NME 204 depending upon the contents of an Association Response frame sent by the AP 202 to a station 206. An Association Request frame is sent by the station 206 to the AP 202 in an attempt to associate the station 206 in the basic service set (BSS) with the AP 202 (step 210). The AP 202 in turn replies to the station 206 with an Association Response frame (step 212), which includes a status code indicating whether the association was successful or not, and if not successful, a reason code for the failed association. It is noted that the status codes used are the status codes set forth in the 802.11 standards.

The AP 202 evaluates the status code contained in the Association Response frame (step 214). If the status code indicates a successful association, then the AP 202 sends an Associate notification to the NME 204 (step 216). The Associate notification includes the MAC address of the station 206 to which the Association Response frame was sent. If the status code does not indicate a successful association (step 214), then the AP 202 sends an Associate Failed notification to the NME 204 (step 218). The Associate Failed notification includes the MAC address of the station 206 to which the Association Response frame was sent and the reason for the association failure.

Figure 3 is a flow diagram showing notification messages sent by an AP 302 to a NME 304 depending upon the contents of a Reassociation Response frame sent by the AP 302 to a station 306. A Reassociation Request frame is sent by a roaming station 306 to a new AP 302 in an attempt to reassociate the station 306 with the new AP 302 (step 310). The new AP 302 in turn replies to the station 306 with a Reassociation Response frame (step 312), which includes a status code indicating whether the reassociation was successful or not, and if not successful, a reason code for the failed reassociation.

The new AP 302 evaluates the status code contained in the Reassociation Response frame (step 314). If the status code indicates a successful reassociation, then the AP 302 sends a Reassociate notification to the NME 304 (step 316). The Reassociate notification includes the MAC address of the station 306 to which the Reassociation Response frame was sent. If the status code does not indicate a successful reassociation (step 314), then the AP 302 sends a Reassociate Failed notification to the NME 304 (step 318). The Reassociate Failed notification includes the MAC address of the station 306 to which the Reassociation Response frame was sent and the reason for the reassociation failure.

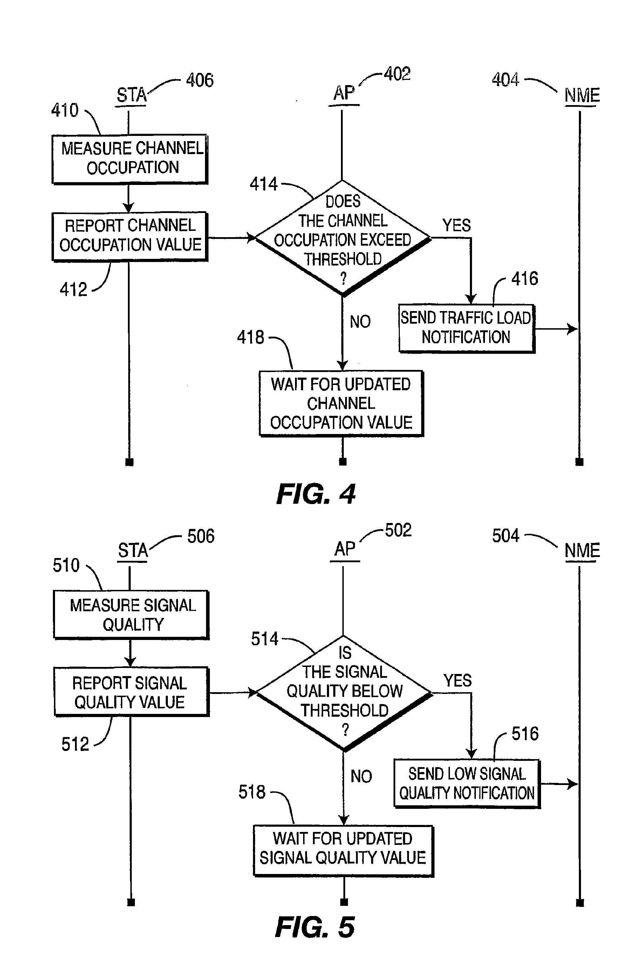

Figure 4 is a flow diagram showing a Traffic Load notification message sent by an AP 402 to a NME 404 depending upon a channel occupation value sent from a station 406 to the AP 402. A Traffic Load notification is a message to signal from the AP 402 to the NME 404 that the averaged experienced traffic load in the BSS exceeds a certain limit.

The station 406 measures the channel occupation (step 410) and reports the channel occupation value to the AP 402 (step 412). The AP 402 compares the channel occupation value reported by the station 406 to a predetermined threshold (step 414). The threshold is exceeded when the average channel occupation ratio is higher than a predetermined percentage for longer than a predetermined time. It is noted that the baseline channel occupation ratio and the minimum time are implementation-specific. In one embodiment of the invention, the baseline channel occupation ratio is 30% and the minimum time is 10 minutes.

If the channel occupation value exceeds the threshold, a Traffic Load notification is sent to the NME 404 (step 416). The Traffic Load notification includes the traffic load value as corresponding to a predetermined value. If the channel occupation value does not exceed the threshold (step 418), then the AP 402 waits for receipt of an updated channel occupation value, and continues with normal AP operation.

Figure 5 is a flow diagram showing a Low Signal Quality notification message sent by an AP 502 to a NME 504 depending upon a signal quality value sent from a station 506 to the AP 502. A Low Signal Quality notification is a message to signal from the AP 502 to the NME 504 that a particular station is experiencing a low signal quality for a certain amount of time.

The station 506 measures the signal quality (step 510) and reports the signal quality value to the AP 502 (step 512). The AP 502 evaluates the signal quality to determine whether the signal quality is below a predetermined threshold (step 514). The threshold is whether the average signal quality level is a predetermined percentage lower than a predetermined value for longer than a predetermined time. It is noted that the percentage difference, the baseline signal quality value, and the minimum time are implementation-specific. In one embodiment of the invention, the percentage difference is 50%, the baseline signal quality value is 10 dB signal to noise ratio (SNR), and the minimum time is 10 minutes.

If the signal quality is below the threshold, then a Low Signal Quality notification is sent to the NME 504 (step 516). The Low Signal Quality notification includes the MAC address of the station experiencing low signal quality and its average signal quality level. If the signal quality value exceeds the threshold (step 518), then the AP 502 waits for receipt of an updated signal quality value, and continues with normal AP operation.

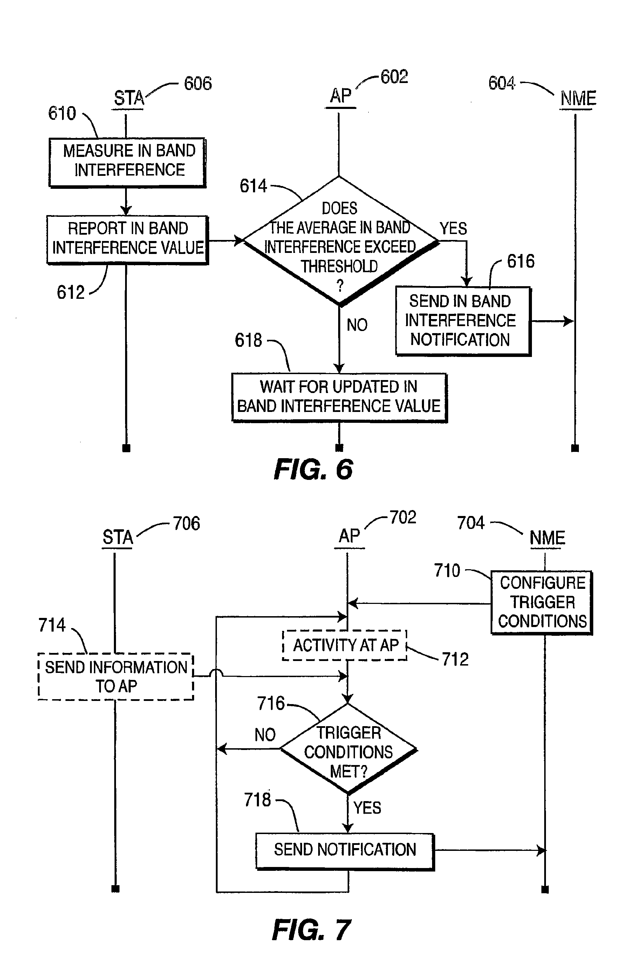

Figure 6 is a flow diagram showing an In Band Interference notification message sent by an AP 602 to a NME 604 depending upon an in band interference value sent from a station 606 to the AP 602. An In Band Interference notification is a message to signal from the AP 602 to the NME 604 that the average experienced interference level in the BSS exceeds a certain limit.

The station 606 measures the in band interference (step 610) and reports the in band interference value to the AP 602 (step 612). The AP 602 determines whether the in band interference value exceeds a predetermined threshold (step 614). The threshold is exceeded when the station 606 perceives an average interference level higher than a predetermined value in dBm for longer than a predetermined time. It is noted that the baseline interference level and the minimum time are implementation-specific. In one embodiment of the invention, the baseline interference level is -75 dBm and the minimum time is 10 minutes.

If the in band interference exceeds the threshold, then an In Band Interference notification is sent to the NME 604 (step 616). The In Band Interference notification includes the interference level. If the in band interference value is below the threshold (step 618), then the AP 602 waits for receipt of an updated in band interference value, and continues with normal AP operation.

The contents of each type of notification can vary by the station's MAC address, the reason code, the status code, and the error code. The notifications can be dependent on configuration by the NME. For example, an In Band Interference notification is sent when interference level as given by measurement A exceeds a configured threshold B for longer than C seconds, with the variables A, B, and C being configuration-specific or implementation-specific.

Figure 7 is a flow diagram showing a generic notification message sent by an AP 702 to a NME 704 after a trigger condition has been met. The NME 704 configures trigger conditions and transmits the trigger conditions to the AP 702 (step 710). In order for the trigger to be activated, one of two events can occur: some activity at the AP 702 (step 712) or a station 706 sends information to the AP 702 (step 714). It is noted that either one or both of the steps 712, 714 may satisfy the trigger conditions, and is dependent upon the trigger conditions set by the NME (hence, steps 712 and 714 are shown as dashed boxes, because both steps do not have to be performed). Step 712 can include AP-based events such as an internal AP measurement or other internal AP trigger. Step 714 can include any action taken by the station 706, such as sending a request frame to the AP 702.

A determination is made whether the trigger conditions are met (step 716). If the trigger conditions are not met, then the AP 702 waits for additional activity, as indicated by steps 712, 714. If the trigger conditions are met (step 716), then a notification is sent from the AP 702 to the NME 704 (step 718). The AP then returns to waiting for additional activity, as indicated by steps 712, 714.

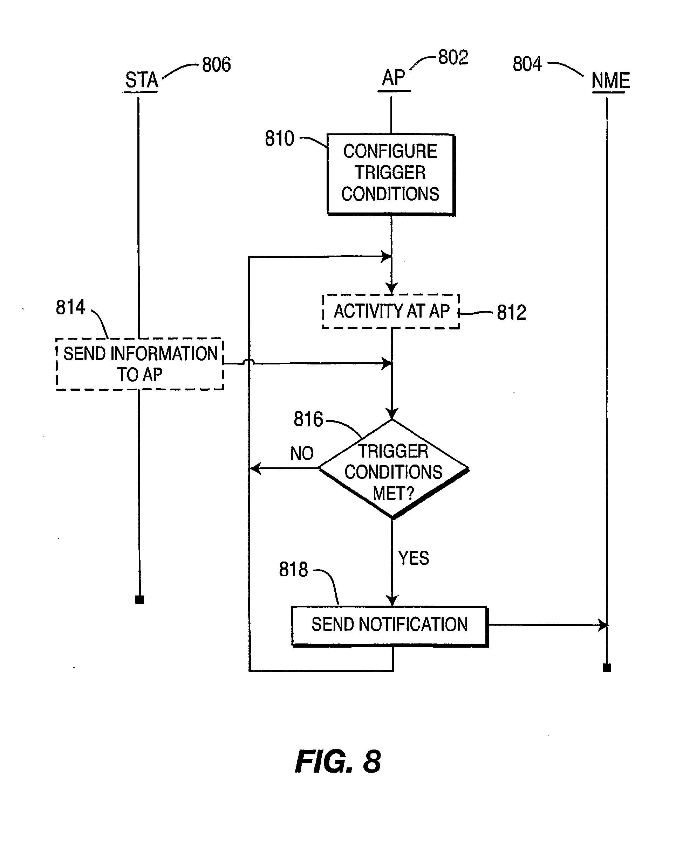

Figure 8 is a flow diagram showing an alternate embodiment of a generic notification message sent by an AP 802 to a NME 804 after a trigger condition has been met. The AP 802 configures trigger conditions (step 810). In order for the trigger to be activated, one of two events can occur: some activity at the AP 802 (step 812) or a station 806 sends information to the AP 802 (step 814). It is noted that either one or both of the steps 812, 814 may satisfy the trigger conditions, and is dependent upon the trigger conditions set by the NME (hence, steps 812 and 814 are shown as dashed boxes, because both steps do not have to be performed). Step 812 can include AP-based events such as an internal AP measurement or other internal AP trigger. Step 814 can include any action taken by the station 806, such as sending a request frame to the AP 802.

A determination is made whether the trigger conditions are met (step 816). If the trigger conditions are not met, then the AP 802 waits for additional activity, as indicated by steps 812, 814. If the trigger conditions are met (step 816), then a notification is sent from the AP 802 to the NME 804 (step 818). The AP then returns to waiting for additional activity, as indicated by steps 812,814.

Although the features and elements of the present invention are described in the preferred embodiments in particular combinations, each feature or element can be used alone without the other features and elements of the preferred embodiments or in various combinations with or without other features and elements of the present invention. While specific embodiments of the present invention have been shown and described, many modifications and variations could be made by one skilled in the art without departing from the scope of the invention. The above description serves to illustrate and not limit the particular invention in any way.

### ITEMISED EMBODIMENTS

1. A method for remote radio resource management in a wireless local area network (WLAN), the WLAN including a station, an access point (AP), and a network management entity (NME), the method comprising the steps of:
   configuring a trigger condition at the AP;
   determining whether the trigger condition has been met; and
   sending a notification message from the AP to the NME if the trigger condition has been met.
2. The method according to item 1, wherein the configuring step is performed by the NME.
3. The method according to item 1, wherein the configuring step is performed by the AP.
4. The method according to item 1, wherein the trigger condition is met upon receipt of information from the station.
5. The method according to item 4, wherein the information includes a request message sent from the station to the AP.
6. The method according to item 4, wherein the information includes a measurement taken by the station.
7. The method according to item 1, wherein the trigger condition is met upon an activity at the AP.
8. The method according to item 7, wherein the activity includes a measurement taken by the AP.
9. The method according to item 7, wherein the activity includes the AP detecting that a parameter threshold has been crossed.
10. The method according to item 1, further comprising the step of repeating the determining and sending steps.
11. A method for remote radio resource management in a wireless local area network (WLAN), the WLAN including a station, an access point (AP), and a network management entity (NME), the method comprising the steps of:
   transmitting a request message from the station to the AP;
   processing the request message at the AP;
   responding to the request message by sending a response message from the AP to the station;
   evaluating the contents of the response message at the AP; and
   sending a notification message from the AP to the NME based on the contents of the response message.
12. The method according to item 11, wherein
   the request message is an association request message; and
   the response message is an association response message.
13. The method according to item 12, wherein the notification message is an association notification if the association is successful.
14. The method according to item 13, wherein the association notification includes a media access control address of the station to which the association response message was sent.
15. The method according to item 12, wherein the notification message is an association failed notification if the association failed.
16. The method according to item 15, wherein the association failed notification includes
   a media access control address of the station to which the association response message was sent; and
   a reason code to indicate the reason for the failed association.
17. The method according to item 11, wherein
   the request message is a reassociation request message; and
   the response message is a reassociation response message.
18. The method according to item 17, wherein the notification message is a reassociation notification if the reassociation is successful.
19. The method according to item 18, wherein the reassociation notification includes a media access control address of the station to which the reassociation response message was sent.
20. The method according to item 17, wherein the notification message is a reassociation failed notification if the reassociation failed.
21. The method according to item 20, wherein the reassociation failed notification includes
   a media access control address of the station to which the reassociation response message was sent; and
   a reason code to indicate the reason for the failed reassociation.
22. A method for remote radio resource management in a wireless local area network (WLAN), the WLAN including a station, an access point (AP), and a network management entity (NME), the method comprising the steps of:
   measuring a parameter at the station;
   reporting the parameter from the station to the AP;
   comparing the parameter to a predetermined threshold at the AP; and
   sending a notification message from the AP to the NME if the parameter meets the threshold.
23. The method according to item 22, wherein
   the parameter is a channel occupation value; and
   the notification message is a traffic load notification.
24. The method according to item 23, wherein the sending step includes sending the traffic load notification from the AP to the NME if the channel occupation value exceeds the threshold.
25. The method according to item 24, wherein the threshold is exceeded when an average channel occupation ratio is higher than a predetermined percentage for longer than a predetermined time.
26. The method according to item 22, wherein
   the parameter is a signal quality value; and
   the notification message is a low signal quality notification.
27. The method according to item 26, wherein the sending step includes sending the low signal quality notification from the AP to the NME if the signal quality value is below the threshold.
28. The method according to item 27, wherein the signal quality value is below the threshold when an average signal quality level is a predetermined percentage lower than a predetermined value for longer than a predetermined time.
29. The method according to item 22, wherein
   the parameter is an in band interference value; and
   the notification message is an in band interference notification.
30. The method according to item 29, wherein the sending step includes sending the in band interference notification from the AP to the NME if the in band interference value exceeds the threshold.
31. The method according to item 30, wherein the threshold is exceeded when an average interference level is higher than a predetermined value for longer than a predetermined time.
32. A network management entity (NME) for remote radio resource management in a wireless local area network (WLAN), the WLAN including a station and an access point (AP), the NME comprising:
   receiving means for receiving a notification message from the AP;
   processing means for processing said notification message; and
   managing means for managing the radio resources of the WLAN based on the contents of said notification message.
33. An access point (AP) in a wireless local area network (WLAN), the WLAN including a station and a network management entity (NME), the AP comprising:
   receiving means for receiving information from the station;
   processing means for processing the information and generating a notification message, the contents of said notification message based on the processed information; and
   transmitting means for transmitting said notification message to the NME.
34. The access point according to item 33, wherein
   the information includes a request frame sent by the station;
   said processing means includes:
   processing the request frame;
   generating a response frame to be sent from the AP to the station;
   evaluating the contents of the response frame; and
   generating the contents of said notification message based on the contents of the response frame.
35. The access point according to item 33, wherein
   the information includes a measurement taken at the station;
   said processing means includes:
   comparing the measurement with a predetermined threshold; and
   generating the contents of said notification message based on the results of the comparison.
36. A method for use in an access point (AP) in a wireless local area network (WLAN), the method comprising:
   receiving a message at the AP from a network management entity (NME), wherein the message indicates a trigger condition related to a quality of service parameter;
   the AP determining, based on a measurement of the quality of service parameter in the WLAN, whether the trigger condition has been met; and
   on condition that the trigger condition has been met, sending a notification message from the AP to the NME, the notification message including information related to the measurement of the quality of service parameter.
37. The method according to item 36, wherein the determining whether the trigger condition has been met includes determining whether the measurement of the quality of service parameter meets a threshold.
38. The method according to item 36, further comprising the AP receiving information from a station in the WLAN that indicates the measurement of the quality of service parameter.
39. The method according to item 36, wherein the quality of service parameter is one of: traffic load, signal quality, or in-band interference.
40. The method of item 36, wherein the WLAN is based on one or more of: Institute of Electrical and Electronics Engineers (IEEE) 802.11a technology; IEEE 802.11b technology; or IEEE 802.11g technology.
41. An access point (AP) for use in a wireless local area network (WLAN), the AP comprising:
   means for receiving a message from a network management entity (NME), wherein the message indicates a trigger condition related to a quality of service parameter;
   means for determining, based on a measurement of the quality of service parameter in the WLAN, whether the trigger condition has been met; and
   means for sending a notification message from the AP to the NME on condition that the trigger condition has been met, the notification message including information related to the measurement of the quality of service parameter.
42. The AP according to item 41, wherein the trigger condition has been met when the measurement of the quality of service parameter meets a threshold.
43. The AP according to item 41, further comprising:
   means for receiving information from a station in the WLAN that indicates the measurement of the quality of service parameter.
44. The AP according to item 41, wherein the quality of service parameter is one of: traffic load, signal quality, or in-band interference.
45. The AP of item 41, wherein the WLAN is based on one or more of: Institute of Electrical and Electronics Engineers (IEEE) 802.11a technology; IEEE 802.11b technology; or IEEE 802.11g technology.
46. A method for use in an access point (AP) in a wireless local area network (WLAN), the method comprising:
   the AP receiving information from a station in the WLAN, wherein the information indicates a value of a quality of service parameter measured by the station in the WLAN;
   the AP comparing the value of the quality of service parameter to a threshold; and
   on condition that the value of the quality of service parameter meets the threshold, the AP sending a notification message to a network management entity (NME), the notification message including information related to the quality of service parameter.
47. The method according to item 46, wherein the quality of service parameter is channel occupation and the notification message is a traffic load notification, wherein the threshold is exceeded when an average channel occupation value is higher than a percentage threshold for longer than a time threshold.
48. The method according to item 46, wherein the quality of service parameter is signal quality and the notification message is a low signal quality notification, wherein the signal quality is below the threshold when an average signal quality value is a percentage lower than a threshold for longer than a time threshold.
49. The method according to item 46, wherein the quality of service parameter is in-band noise and the notification message is an in-band noise notification, wherein the threshold is exceeded when an average noise value is higher than a percentage threshold for longer than a time threshold.
50. An access point (AP) for use in a wireless local area network (WLAN), the AP comprising:
   means for receiving information from a station in the WLAN, wherein the information indicates a value of a quality of service parameter measured by the station in the WLAN;
   means for comparing the value of the quality of service parameter to a threshold; and
   means for sending a notification message to a network management entity (NME) on condition that the value of the quality of service parameter meets the threshold, the notification message including information related to the quality of service parameter.

## Claims

1. A method for use in an access point (AP), the method comprising:
receiving information regarding a trigger condition, the trigger condition relating to a quality of service parameter;
determining that the trigger condition is met based on information received from a station indicating measurement of the quality of service parameter;
sending a notification message, wherein the notification message includes information related to the measurement of the quality of service parameter.

2. The method of claim 1 wherein the quality of service parameter is traffic load.

3. The method of claim 1 wherein the quality of service parameter is signal quality.

4. The method of claim 1 wherein the quality of service parameter is in-band interference.

5. A method for use in an access point (AP), the method comprising:
the AP generating a quality of service parameter value based on a quality of service measurement, wherein the quality of service parameter value is a channel occupation value;
the AP comparing the quality of service parameter value to a threshold value; and
based on the comparison of the quality of service parameter value to the threshold value, sending a notification message, wherein the notification message includes information related to the quality of service parameter value.

6. The method of claim 5, wherein the notification message is a traffic load notification.

7. The method of claim 5, wherein the quality of service parameter value is a signal quality value; and the notification message is a signal quality notification.

8. The method of claim 5, wherein the quality of service parameter value is an in-band noise value; and the notification message is an in band noise notification.

9. An access point (AP) comprising:
a receiver configured to receive information regarding a trigger condition, wherein the trigger condition is related to a quality of service parameter;
a processor configured to determine that the trigger condition is met based on information received from a station indicating measurement of the quality of service parameter; and
a transmitter configured to transmit a notification message, wherein the notification message includes information related to the measurement of the quality of service parameter.

10. The AP of claim 9 wherein the quality of service parameter is traffic load.

11. The AP of claim 9 wherein the quality of service parameter is signal quality.

12. The AP of claim 9 wherein the quality of service parameter is in-band interference.
